**Europäisches Patentamt**

**European Patent Office**

**Office européen des brevets**

(19)

(11)  **EP 1 437 190 A2**

(12)  **EUROPÄISCHE PATENTANMELDUNG**

(43) Veröffentlichungstag:
**14.07.2004 Patentblatt 2004/29**

(51) Int Cl.⁷: **B23D 61/02**, B23D 61/12,
B23D 61/18, C22C 38/22

(21) Anmeldenummer: **03028075.4**

(22) Anmeldetag: **09.12.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **12.12.2002 DE 10257967**

(71) Anmelder: **Stahlwerk Ergste Westig GmbH
58239 Schwerte (DE)**

(72) Erfinder:
• **Pacher, Oskar, Dr.
8041 Graz (AT)**
• **Lenoir, Werner
59423 Unna (DE)**

(74) Vertreter:
**König, Gregor Sebastian, Dipl.-Biol. et al
König-Szynka-von Renesse
Patentanwälte
Lohengrinstrasse 11
40549 Düsseldorf (DE)**

(54)  **Verwendung einer Chrom-Stahllegierung**

(57)      Eine Chrom-Stahllegierung mit 0,25 bis 0,35%
Kohlenstoff, 0,3 bis 0,5% Silizium, 0,8 bis 1,5% Mangan,
1,0 bis 2,0% Molybdän, 1,5 bis 3,5% Chrom, 0,5 bis
1,5% Nickel, 0,5 bis 2,5% Wolfram, 0,15 bis 0,30% Vanadium und/oder 0,05 bis 0,10% Niob, 0,05 bis 1,0%
Kupfer, 0,01 bis 0,2% Aluminium und 0,01 bis 1,0% Kobalt, Rest Eisen zeichnet sich durch eine hohe Beständigkeit gegen Wasserstoffversprödung aus und eignet
sich daher besonders als Werkstoff für galvanisch,
PVD- oder CVD-beschichtete Gegenstände, beispielsweise für Sägeblätter mit in die Beschichtung eingelagerten Hartstoffpartikeln.

Fig. 1

**EP 1 437 190 A2**

**Beschreibung**

Stähle besitzen je nach ihrer Zusammensetzung eine unterschiedliche Löslichkeit für Wasserstoff, der von der Stahloberfläche adsorbiert wird und von dort atomar in das Eisengitter diffundiert, wo er als Zwischengitteratom gelöst wird und sich insbesondere im Bereich von Gitterfehlern anreichert. Das erklärt die verhältnismäßig hohe Wasserstofflöslichkeit kaltverformter und/oder gehärteter Stähle. Der gelöste Wasserstoff setzt insbesondere in ferritischen Stählen mit zunehmender Streckgrenze die Zähigkeit, insbesondere die Bruchdehnung herab. Das erklärt sich daraus, daß sich der Wasserstoff im Bereich von Rissen vor der Rißspitze im gedehnten Eisengitter einlagert und mit zunehmender Wasserstoffkonzentration zu einem weiteren Aufreißen bzw. einer Rißausbreitung durch Spaltbruch führt. Diese Rißausbreitung hängt naturgemäß von der Konzentration des gelösten Wasserstoffs und demzufolge von der Wasserstofflöslichkeit des jeweiligen Stahls ab.

Die Wasserstoffaufnahme im Stahl ist nicht nur von dessen Zusammensetzung abhängig: Sie wird in erheblichem Maße auch von physikalischen Parametern beeinflußt. So kommt es beispielsweise beim Schweißen mit umhüllten Elektroden und beim Unterpulverschweißen infolge der im Elektrodenmantel bzw. im Pulver enthaltenen Feuchtigkeit zu einer erheblichen Wasserstoffaufnahme im Schweißgut und in dem Grundmaterial. Die Gefahr einer Wasserstoffaufnahme ist des weiteren bei gehärteten Stählen und beim elektrolytischen Beschichten besonders groß. Beim Beschichten scheidet sich zusammen mit dem Metall gleichzeitig auch Wasserstoff kathodisch ab. Dieser Wasserstoff wirkt sowohl im Überzug als auch im Grundwerkstoff versprödend.

Bei Bandsägeblättern, die üblicherweise über zwei Rollen geführt sind und daher je Umlauf eine zweimalige Umlenkung von 360° erfahren, kann die Neigung zur Wasserstoffversprödung eine erhebliche Rolle spielen. Endlos-Bandsägeblätter bzw. Bimetall-Sägebänder bestehen im allgemeinen aus einem Trägerband, dessen Enden miteinander stumpf verschweißt sind, und das mit Schneidzähnen aus Schnellarbeitsstahl oder Hartmetall bestückt ist. Für sehr harte und spröde Werkstoffe wie Silizium, intermetallische Verbindungen, Keramiken und Stein reicht die Verschleißbeständigkeit derartiger Schneidzähne jedoch nicht aus. Die deutsche Offenlegungsschrift 37 02 795 A1 schlägt daher die Verwendung von Endlos-Bändsägeblättern vor, deren Schneidkante mit aufgedampften Diamant-Partikeln versehen ist. Ein derartiges Endlosband erlaubt zwar saubere Schnitte und besitzt auch eine im Vergleich zu Bimetall-Sägebändern erheblich höhere Lebensdauer. Schwierigkeiten ergeben sich jedoch beim Aufdampfen der Diamant-Partikel infolge der dafür erforderlichen Temperaturen in der Größenordnung von 800 bis 1000 °C bei einer Einwirkungsdauer von 5 bis 16 Stunden. Dies wirkt sich jedoch nachteilig auf das Trägerband aus und verkürzt dessen Lebensdauer.

Bekannt sind auch Kreissägeblätter, deren Peripherie bzw. Schneidzähne eine elektrolytisch aufgebrachte metallische Beschichtung mit eingelagerten Diamant-Partikeln aufweisen. Beim elektrolytischen Beschichten kommt es jedoch zwangsläufig auch zum Abscheiden von Wasserstoff aus dem Elektrolyten und damit zu einer schädlichen Versprödung der Sägeblattperipherie. Bei Kreissägeblättern ist das jedoch weniger problematisch als bei Bandsägeblättern weil Kreissägeblätter keiner nennenswerten Biegewechselbeanspruchung unterliegen. Ein nicht zu vermeidender Nachteil von Kreissägeblättern ergibt sich allerdings daraus, daß deren Schneidkante nicht gespannt ist und das Schneidergebnis daher durch Schwingungen und Verzug nachteilig beeinflußt wird. Diesen Nachteil will ein aus der US-Patentschrift 4 847 168 bekanntes innenschneidendes ringscheibenförmiges Kreissägeblatt mit einer diamantbeschichteten Schneidkante aus einer Stahllegierung mit höchstens 0,10% Kohlenstoff, über 1,0% bis höchstens 3,0% Silizium, unter 0,5% Mangan, 4,0 bis 8,0% Nickel, 12 bis 18% Chrom, 0,5 bis 3,5% Kupfer, höchstens 0,15% Stickstoff und höchstens 0,004% Schwefel sowie einem Gesamtgehalt an Kohlenstoff und Stickstoff von mindestens 0,10% vermeiden. Das Kreissägeblatt eignet sich zum Schneiden von Halbleiterwerkstoffen; es besitzt nach einer Kaltverformung aufgrund seines hohen Siliziumgehalts nach dem Kaltverformen ein im wesentlichen martensitisches Gefüge, das im Falle eines elektrolytischen Beschichtens in besonderem Maße einer Wasserstoffversprödung unterliegt.

Ein derartiges Kreissägeblatt vermeidet zwar die schädlichen Schwingungen dadurch, daß die an der innenliegenden Schneidkante entstehenden Schwingungen infolge der nach außen zunehmenden Fläche des Sägeblatts hinreichend gedämpft werden. Dieser Vorteil wird jedoch dadurch erkauft, daß zum Trennen lediglich die kurze diamantbesetzte Kante der zentrischen Sägeblattöffnung zur Verfügung steht. Die geringe Schneidkantenlänge führt zwangsläufig zu einem schnelleren Verschleiß bzw. einer geringeren Lebensdauer und macht daher ein häufiges Wechseln des Sägeblatts erforderlich. Ein weiterer Nachteil von innenschneidenden Kreissägeblättern besteht darin, daß die Abmessungen des Schneidgutes von dem begrenzten Durchmesser der Schneidöffnung im Kreissägeblatt abhängig ist.

Bandsägeblätter besitzen dagegen eine große Länge der Schneidkante und lassen sich darüber hinaus aber auch mit unterschiedlicher Spannung betreiben; sie erfordern jedoch wegen der zweimaligen 360"-Umlenkung je Umlauf und der hohen Umlaufgeschwindigkeit ein hohes Maß an Biegewechselfestigkeit. Zwar gibt es eine Reihe von legierten Stählen mit hoher Biegewechselfestigkeit. Jedoch kommen diese Stähle für ein elektrolytisches Aufbringen einer Metallschicht mit eingebetteten Diamant-Partikeln nicht in Frage, weil ihre Biegewechselfestigkeit durch die Aufnahme von Wasserstoff beim elektrolytischen Abscheiden infolge Wasserstoffversprödung verlorengeht.

Ein weiterer Nachteil diamantbeschichteter Sägeblätter besteht darin, daß es bei höheren Temperaturen zu einer Diamant-Umwandlung in Graphit und damit zu einem totalen Verlust der Härte und der Einbindung in die metallische Bettungsmasse kommen kann. Das Härten des Trägerbandes muß daher vor dem Beschichten stattfinden. Damit ist jedoch ein neues Problem verbunden, weil bei gehärteten Stählen die Gefahr einer Wasserstoffaufnahme bei einem Beizen sowie bei einem elektrolytischen aus der jeweilige Säure oder auch thermischen Beschichten aus der Gasphase durch Abspalten von Wasserstoff aus Kohlenwasserstoffen besonders groß ist.

Der Erfindung liegt das Problem zugrunde, eine Stahllegierung mit hoher Wasserstoffbeständigkeit auch im gehärteten Zustand zu schaffen, die sich insbesondere als Werkstoff für mit Hartstoffpartikeln beschichtete Bandsägeblätter mit hoher Biegewechsel- und Verschleißfestigkeit eignet.

Um dies zu erreichen, schlägt die Erfindung die Verwendung einer Chrom-Stahllegierung mit 0,25 bis 0,35% Kohlenstoff, 0,3 bis 0,5% Silizium, 0,8 bis 1,5% Mangan, 1,0 bis 2,0% Molybdän, 1,5 bis 3,5% Chrom, 0,5 bis 1,5% Nickel, 0,5 bis 2,5% Wolfram, 0,15 bis 0,30% Vanadium und/oder 0,05 bis 0,10% Niob, 0,05 bis 1,0% Kupfer, 0,01 bis 0,2% Aluminium und 0,01 bis 1,0% Kobalt, Rest Eisen einschließlich erschmelzungsbedingter Verunreinigungen vor.

Besonders geeignet ist eine Stahllegierung mit 1,2 bis 1,8% Molybdän, höchstens 2,5% Chrom, 1,2 bis 1,8% Wolfram und 0,1 bis 0,8% Kupfer einzeln oder nebeneinander.

Die Wasserstoffbeständigkeit ist dann besonders groß, wenn das Verhältnis der Gehalte an Wolfram und Molybdän in der Größenordnung von 1 liegt und/oder der Stahl gleichzeitig Niob und Vanadium enthält.

Die erfindungsgemäße Stahllegierung besitzt eine Härte von 450 bis 550 HV entsprechend einer Zugfestigkeit von 1650 bis 1850 $N/mm^2$ und eignet sich wegen ihrer hohen Beständigkeit gegen (Wasserstoff-)Versprödung besonders als Trägerwerkstoff für elektrolytisch, PVD- oder CVD-beschichtete Gegenstände (PVD = Physical Vapor Deposition; CVD = Chemical Vapor Deposition) wie Bandsägeblätter. Als Hartstoffpartikel kommen Diamant, kubisches Bornitrid, Hartmetall und Korund in Frage.

Die hohe Wasserstoffbeständigkeit der erfindungsgemäßen Stahllegierung erlaubt beim Herstellen von Bandsägeblättern eine Wärmebehandlung des kaltverformten Trägerbands vor dem Beschichten, ohne daß es beim Beschichten durch die Anwesenheit von Wasserstoff, zu einer (Wasserstoff-) Versprödung kommt. Gleichzeitig damit verbunden ist wegen der "vorgezogenen" Wärmebehandlung auch die Beseitigung der Gefahr einer Diamantumwandlung in Graphit bei sonst notwendigen Härten im Anschluß an das Beschichten, wie es bei nicht hinreichend wasserstoffbeständigen Stahllegierungen erforderlich ist.

Wegen ihrer Wasserstoffbeständigkeit eignet sich die erfindungsgemäße Stahllegierung besonders gut für ein galvanisches Beschichten, das üblicherweise bei niedrigen Temperaturen bis 80 °C stattfindet. Vor dem Beschichten ist jedoch ein Beizen mit Säuren zum Entfernen von Oberftächenoxiden erforderlich um einen ausreichenden Haftgrund für die Beschichtung zu schaffen. Beim Beizen und galvanischen Beschichten entsteht immer auch Wasserstoff, der bei nicht hinreichend wasserstoffbeständigen Werkstoffen in das Metallgitter eindiffundiert und zu einer Beeinträchigung der Biegewachsfestigkeit führt. Diese Gefahr ist beim Beizen besonders groß, weil dabei viel Wasserstoff entsteht, der atomar in das Metallgitter gelangt.

Die Wärmebehandlung der erfindungsgemäßen Stahllegierung besteht vorzugsweise in einem Austenitisierungsglühen bei 1150 bis 1200°C, vorzugsweise höchstens 1190°C mit einem anschließenden Abschrecken auf Raumtemperatur sowie einem Anlassen bei 450 bis 600°C, vorzugsweise bei mindestens 480°C. Zum Einstellen einer Härte von beispielsweise von 450 bis 550 HV kann die Stahllegierung zwei- oder dreimal bei den vorerwähnten Temperaturen angelassen werden.

Das Trägerband braucht nur im Bereich seiner Schneidkante bzw. der Schneidzähne beispielsweise zu 10 bis 60% seiner Oberfläche beschichtet zu sein und erfordert dann eine isolierende Abdeckung in dem Bereich außerhalb der vorgesehenen Beschichtung. Vor dem Beschichten kann es erforderlich sein, das Bandsägeblatt durch Beizen mit einer Säure zu reinigen. Die hohe Wasserstoffbeständigkeit der erfindungsgemäßen Stahllegierung garantiert dabei, daß es nicht zu einer unzulässigen Wasserstoffaufnahme aus der Beizlösung kommt.

Die Beschichtung besteht vorzugsweise aus Hartstoffen oder aus einem Werkstoff, der als Bettungsmasse für die Hartstoffpartikel dient und Titan, Aluminium, Nickel, Kupfer, Zinn, Kohlenstoff, Stickstoff und Sauerstoff enthalten kann, beispielsweise Karbide wie Titankarbide oder - Karbonitride, Titanaluminiumnitride und Oxide wie $Al_2O_3$. Möglich ist auch eine weiche Beschichtung, wenn diese anschließend gehärtet wird.

Die Erfindung wird nachfolgend anhand von Ausführungsbeispielen und der Zeichnungen des näheren erläutert. In den Zeichnungen zeigen:

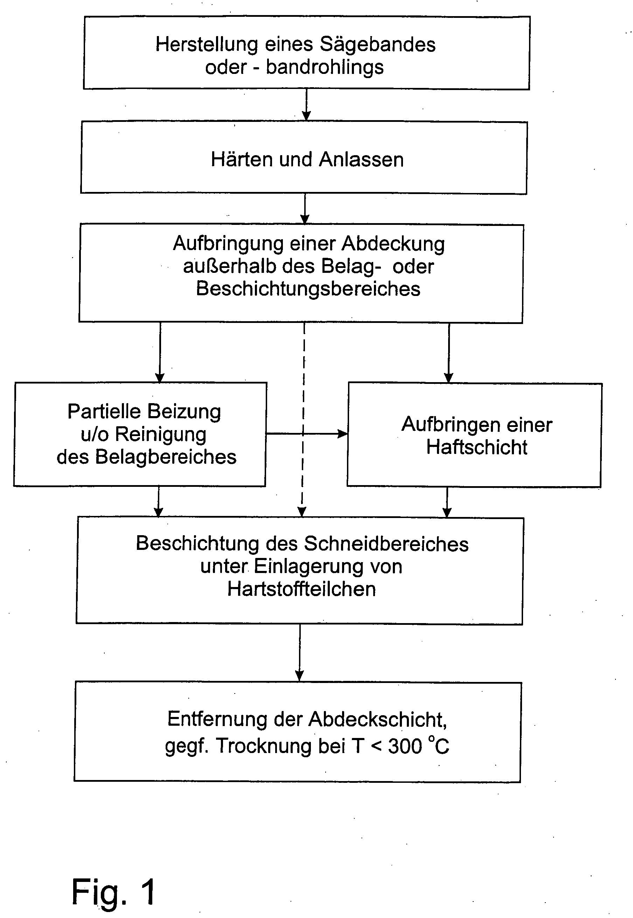

Fig. 1     ein Blockdiagramm mit den einzelnen Verfahrensschritten beim Herstellen eines Sägebandes,

Fig. 2     die schematische Darstellung einer Prüfvorrichtung zur Ermittlung der Biegewechselfestigkeit,

Fig. 3     eine grafische Darstellung der Wasserstoffaufnahme in Abhängigkeit von der Grenzbiegezahl $N_O$ und

Fig. 4    eine grafische Darstellung der Wasserstoffaufnahme K. in Abhängigkeit von der Grenzbiegezahl $N_B$.

Aus der nachfolgenden Tabelle I ergeben sich die Zusammensetzungen von drei erfindungsgemäßen Stahllegierungen E1 bis E3 einerseits und von vier herkömmlichen Vergleichslegierungen V1 bis V4, wie sie beim Herstellen herkömmlicher Bimetall-Sägebänder als Trägerbandwerkstoff zur Verwendung kommen.

## Tabelle I

| Leg. | C (%) | Si (%) | Mn (%) | Mo (%) | Cr (%) | Ni (%) | W (%) | V (%) | Nb (%) | Cu (%) |
|------|-------|--------|--------|--------|--------|--------|-------|-------|--------|--------|
| E1 | 0,28 | 0,40 | 0,90 | 1,35 | 2,0 | 0,90 | 1,30 | 0,22 | 0,05 | 0,08 |
| E2 | 0,30 | 0,38 | 1,08 | 1,50 | 2,0 | 0,95 | 1,50 | 0,28 | 0,10 | 0,15 |
| E3 | 0,33 | 0,33 | 1,00 | 1,08 | 1,9 | 0,80 | 1,05 | 0,15 | 0,08 | 0,22 |
| V1 | 0,26 | 0,20 | 0,40 | 2,40 | 3,8 | 0,45 | 0,05 | 0,21 | 0,01 | 0,05 |
| V2 | 0,34 | 0,35 | 0,95 | 1,95 | 3,1 | 0,70 | 0,10 | 0,05 | 0,01 | 0,05 |
| V3 | 0,46 | 0,25 | 0,61 | 0,95 | 1,2 | 0,50 | 0,01 | 0,30 | 0,005 | - |
| V4 | 0,65 | 0,26 | 0,70 | - | - | - | - | - | - | - |

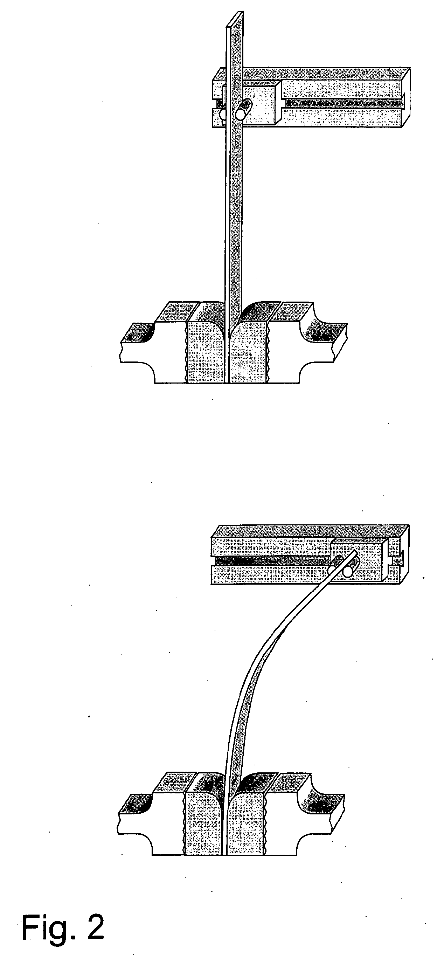

Bei den Versuchen wurden aus den in Tabelle I angeführten Stählen kaltgewalzte Bänder mit einer Dicke von 0,9 mm und einer Breite von 15 mm hergestellt. Daraus wurden Versuchsproben gefertigt. Zum Einstellen unterschiedlicher Härtewerte wurden jeweils zwei verschiedene Wärmebehandlungen durchgeführt. Die Proben E1 bis V3 wurden dazu bei einer Temperatur von 1180 bzw. 1190°C austenitisiert, mit Wasser abgeschreckt und bei 540°C dreimal angelassen. Die Probe V4 wurde hingegen bei 820°C austenitisiert und zweimal bei 300 °C angelassen. Zur Bestimmung der Grenzbiegezahlen $N_O$ und $N_B$, d.h. der Anzahl der Biegungen von wasserstofffreien Proben ($N_O$) und von mit Wasserstoff beladenen Proben ($N_B$) bis zum Bruch diente eine Prüfvorrichtung, deren Prinzip in Fig. 2 dargestellt ist. Die Prüfvorrichtung besaß Spannbacken mit einer gekrümmten, ein Hin- und Herbiegen der Probe erlaubenden Klemmfläche. Auf einem Gleitschlitten war ein Mitnehmer so angeordnet, daß ein seitliches Auslenken der Proben um 30 mm möglich war. Dieser Gleitschlitten wurde mittels einer Pleuelstange und eines Elektromotors mit Untersetzungsgetriebe horizontal bewegt. Die Biegeversuche wurden solange durchgeführt, bis es zum Bruch der Probe kam. Der Bruch wurde elektronisch detektiert und die Anzahl der Biegungen als Zahlenwert ($N_O$ und $N_B$) erfaßt.

Zur Bestimmung der Vickershärte HV1 wurden die Proben einer Auflast von 10 N unterworfen, die Diagonalen der Diamantpyramiden (136° Spitzenwinkel) automatisch ausgemessen und die Härtewerte digital angezeigt.

Zur Beurteilung der Wasserstoffempfindlichkeit bzw. der Grenzbiegezahl $N_B$ wurden die Proben bei Raumtemperatur einzeln als Kathode in eine 15%ige Schwefelsäure eingetaucht und für die Dauer von drei Minuten mit einer Gleichspannung von 6 Volt beaufschlagt. Als Gegenelektrode diente Graphit mit einer ca. 20% größeren Oberfläche. Bei dieser Behandlung bildete sich auf der Probenoberfläche kathodischer Wasserstoff, der in kleinen Bläschen aufstieg, teilweise aber in das Metall eindrang.

Die auf diese Weise mit atomar gelöstem Wasserstoff beladenen Proben wurden sodann mit Hilfe der Versuchsvorrichtung gemäß Fig. 2 hinsichtlich ihre Biegewechselfestigkeit untersucht. Dabei diente die Zahl der Biegungen N als Kennzeichen für die Wasserstoffaufnahme bzw. die Wasserstoffversprödung K.

Die Daten der Versuche sind für jeweils zwei Proben gleicher Zusammensetzung, jedoch unterschiedlicher Wärmebehandlung und demgemäß auch unterschiedlicher Härte in der nachfolgenden Tabelle II zusammengestellt.

## Tabelle II

| Vers. | Legierung | RM (N/mm²) | HV | $N_O$ | $N_B$ | K |
|---|---|---|---|---|---|---|
| 1 | E1 | 1787 | 478 | 25373 | 23771 | 6,3 |
| 2 | E1 | 1802 | 520 | 29973 | 27354 | 8,7 |
| 3 | E2 | 1796 | 485 | 28105 | 26371 | 6,2 |
| 4 | E2 | 1805 | 515 | 28212 | 26506 | 6,0 |
| 5 | E3 | 1775 | 436 | 24164 | 23258 | 3,7 |
| 6 | E3 | 1815 | 525 | 30132 | 27288 | 9,4 |
| 7 | V1 | 1698 | 447 | 19312 | 15231 | 21,1 |
| 8 | V1 | 1765 | 480 | 25686 | 18798 | 26,8 |
| 9 | V2 | 1735 | 475 | 24362 | 19475 | 20,1 |
| 10 | V2 | 1783 | 490 | 26017 | 20572 | 20,9 |
| 11 | V3 | 1785 | 485 | 19954 | 16581 | 16,9 |
| 12 | V3 | 1805 | 502 | 22371 | 17899 | 20,0 |
| 13 | V4 | 1790 | 560 | 17381 | 13251 | 23,8 |
| 14 | V4 | 1875 | 596 | 26352 | 16352 | 37,9 |

In der vorstehenden Tabelle bedeuten:.

Rm:   Zugfestigkeit im gehärteten Zustand in N/mm² (ohne Beladung mit Wasserstoff)
HV:   Vickers-Härte
$N_o$:   Anzahl der Biegungen bis zum Bruch bei den nicht mit Wasserstoff beladenen Proben
$N_B$:   Anzahl der Biegungen der elektroyltisch mit Wasserstoff beladenen Proben

Jede der untersuchten Legierungen besitzt ihren eigenen $N_o$-Wert der Grenzbiegezahl. Wird die Legierung mit Wasserstoff beladen, ergibt sich eine andere Grenzbiegezahl $N_B$, die kleiner ist als $N_o$. Die Verringerung der Grenzbiegezahl infolge des Beladens mit Wasserstoff ergibt sich aus der Differenz $(N_o-N_B)$. Bezieht man diese auf $N_o$ und multipliziert man sie mit 100, dann ergibt sich ein K-Wert:

$$K = 100 \frac{N_o - N_B}{N_o}$$

als Kennzeichen für die Wasserstoffbeständigkeit. Niedrige K-Werte sind ein sicheres Anzeichen für eine hohe Wasserstoffbeständigkeit.

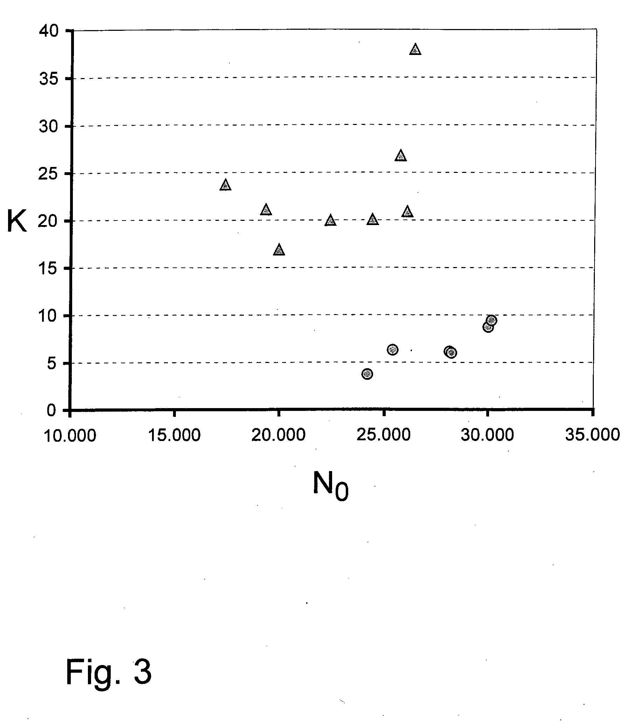

Die Ergebnisse der Biegeversuche mit den nicht beladenen Proben sind in dem Diagramm der Fig. 3 graphisch dargestellt und zeigen, daß es immer zu einer Wasserstoffaufnahme kommt, weil keiner der Meßwerte im Bereich von K = 0 angesiedelt ist. Ein Vergleich der einzelnen Werte zeigt jedoch, daß sich die K-Werte für die erfindungsgemäßen Probenpunkte unterhalb eines K-Wertes von 10 bei maximalen Grenzbiegezahlen $N_o$ von etwa 24.000 bis 32.000 gruppieren, während die Vergleichsproben (Dreiecke) im wesentlichen oberhalb eines K-Wertes von 20 angesiedelt sind. Den höchsten K-Wert erreicht die Vergleichslegierung V4, bei der es sich um einen unlegierten herkömmlichen kohlenstoffreichen Sägeblatt-Werkstoff handelt.

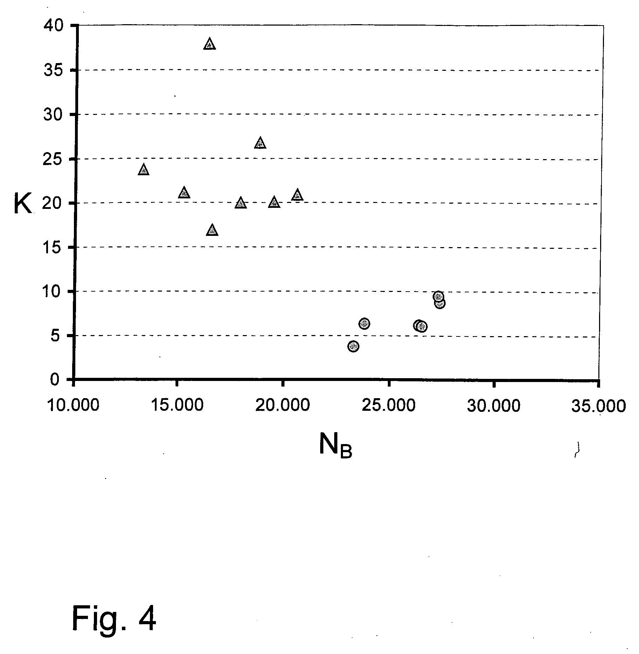

Besonders deutlich kommt die Überlegenheit der erfindungsgemäßen Stahllegierung im Diagramm der Fig. 4 zum Ausdruck, die für die elektrolytisch mit Wasserstoff beladenen Proben die K-Werte als Funktion von $N_B$ darstellt. Die im Vergleich zu den Werten des Diagramms der Fig. 3 geringen Unterschiede zwischen den Grenzbiegezahlen der erfindungsgemäßen Stahllegierungen E1 bis E4 sind auf deren bewußt eingestellten Härteunterschiede sowie auf natürliche Streuungen zurückzuführen. Besonders deutlich zeigt sich die Verbesserung der Wasserstoffbeständigkeit bei einem Vergleich der erfindungsgemäßen Probe E1 mit der Vergleichsprobe V8 bei nahezu gleicher Härte und Festigkeit.

Zum Beschichten für Sägeversuche wurden 1600 mm lange und 15 mm breite Bandstreifen der Legierungen E1, E2, V3 und V4 vom Bandrücken ausgehend beidseitig in einer Breite von 10 mm mit einem PVC-Klebeband abgedeckt. Danach wurde der freigelassene Schneidkantenbereich elektrochemisch gebeizt und in einem Galvanisierbecken elektrolytisch mit Nickel beschichtet. Während der Beschichtung wurden mittels einer gerichteten Strömung Diamant-Partikel in die Nickelschicht eingebaut. Wegen der elektrisch isolierenden Abdeckung wurden die Proben nur im frei gelassenen Schneidkantenbereich beschichtet. Nach dem Beschichten wurde das Sägeband abgespült, getrocknet, das Klebeband entfernt und die Enden durch Stumpfschweißen zu einem Endlosband miteinander verbunden. In einer zweiten Versuchsserie wurde der Schneidkantenbereich eines Sägebandes nach einer ersten Grundbeschichtung mit Nickel in einem Galvanisierbecken in eine Plasmaspitzkammer überführt, um auf die bereits vorhandene elektrolytische Grundbeschichtung eine zweite Schicht aus Nickel und Molybdän sowie Korundpulver und Zirkonoxidgranulat aufzutragen.

Für die Sägeversuche wurde eine Aluminium-Silizium-Gußlegierung verwendet, die aufgrund ihres hohen Silizium-Gehaltes schwer zu sägen war.

Mit den galvanisch beschichteten und mit Diamantkörnern belegten Sägebändern aus den Legierungen E1 und E2 waren bei einer Sägenspannung von 240 N/mm$^2$ 320 bzw. 365 Schnitte mit einer Planheitsabweichung < 20 µm möglich.

Mit dem Vergleichssägen aus den Legierungen V3 und V4 waren bei gleicher Spannung nur 75 bzw. 55 Schnitte möglich. Nach diesen Versuchen wurde die Sägenspannung um 40% reduziert, worauf die Anzahl der Sägenschnitte auf 278 bzw. 310 anstieg. Dabei verschlechterte sich allerdings die Planheitsabweichung auf durchschnittlich 120 µm. Dieser Abfall in der Schnittgüte ist die direkte Folge einer zu geringen Sägenspannung, die besonders bei wasserstoffgeschädigten Stählen im Hinblick auf deren Versprödung notwendig ist.

**Patentansprüche**

1. Verwendung einer Chrom-Stahllegierung mit

| | |
|---|---|
| 0,25 bis 0,35% | Kohlenstoff |
| 0,3 bis 0,5% | Silizium |
| 0,8 bis 1,5% | Mangan |
| 1,0 bis 2,0% | Molybdän |
| 1,5 bis 3,5% | Chrom |
| 0,5 bis 1,5% | Nickel |
| 0,5 bis 2,5% | Wolfram |
| 0,15 bis 0,30% | Vanadium |

und/oder

| | |
|---|---|
| 0,05 bis 0,10% | Niob |
| 0,05 bis 1,0% | Kupfer |
| 0,01 bis 0,2% | Aluminium |
| 0,01 bis 1,0% | Kobalt |

Rest-Eisen einschließlich erschmelzungsbedingter Verunreinigungen als Werkstoff für gegen Wasserstoffversprödung beständige Gegenstände.

2. Verwendung einer Stahllegierung nach Anspruch 1, die jedoch - einzeln oder nebeneinander - 1,2 bis 1,8% Molybdän, 1,5 bis 2,5% Chrom und 1,2 bis 1,8% Wolfram enthält, für den Zweck nach Anspruch 1.

3. Verwendung einer Stahllegierung nach Anspruch 1 oder 2 mit einem Verhältnis der Gehalte an Molybdän und Wolfram von 0,9 bis 1,1 für den Zweck nach Anspruch 1.

4. Verwendung einer Stahllegierung nach einem der Ansprüche 1 bis 3 nach einem Austenitisierungsglühen bei 1150 bis 1200°C, Abschrecken auf Raumtemperatur und Anlassen bei 450 bis 600°C für den Zweck nach Anspruch 1.

5. Verwendung einer Stahllegierung nach einem der Ansprüche 1 bis 4 für elektrolytisch, PVD- oder CVD-beschichtete Gegenstände.

6. Verwendung einer Stahllegierung nach einem der Ansprüche 1 bis 4 mit einer Beschichtung nach Anspruch 5 mit eingelagerten Hartstoffpartikeln.

7. Verwendung einer Stahllegierung nach einem der Ansprüche 1 bis 4 als Werkstoff zum Herstellen von Sägeblättern, die zumindest im Bereich der Schneidzähne mit einer Hartstoffpartikel enthaltenden elektrolytischen, PVD- oder CVD-Schicht versehen sind.

```
┌─────────────────────────────────────┐
│   Herstellung eines Sägebandes       │
│        oder - bandrohlings           │
└─────────────────────────────────────┘
                  │
                  ▼
┌─────────────────────────────────────┐
│        Härten und Anlassen           │
└─────────────────────────────────────┘
                  │
                  ▼
┌─────────────────────────────────────┐
│   Aufbringung einer Abdeckung        │
│    außerhalb des Belag- oder         │
│      Beschichtungsbereiches          │
└─────────────────────────────────────┘
        │                     │
        ▼                     ▼
┌──────────────────┐   ┌──────────────────┐
│ Partielle Beizung│   │                  │
│  u/o Reinigung   │──▶│  Aufbringen einer│
│ des Belagbereiches│  │    Haftschicht   │
└──────────────────┘   └──────────────────┘
        │                     │
        ▼                     ▼
┌─────────────────────────────────────┐
│  Beschichtung des Schneidbereiches   │
│       unter Einlagerung von          │
│         Hartstoffteilchen            │
└─────────────────────────────────────┘
                  │
                  ▼
┌─────────────────────────────────────┐
│   Entfernung der Abdeckschicht,      │
│  gegf. Trocknung bei T < 300 °C      │
└─────────────────────────────────────┘
```

# Fig. 1

Fig. 2

Fig. 3

Fig. 4